(19) Europäisches Patentamt
European Patent Office
Office européen des brevets

(11) Numéro de publication : **0 003 191**
**B1**

# (12) FASCICULE DE BREVET EUROPÉEN

(45) Date de publication du fascicule du brevet : **29.07.81**

(51) Int. Cl.³ : **G 02 B 5/23**, B 29 D 11/00, G 02 B 1/12

(21) Numéro de dépôt : **79400006.7**

(22) Date de dépôt : **04.01.79**

**(54) Procédé pour l'intégration d'une substance photochromique à un substrat de base transparent, en particulier lentille ophtalmique, en matière organique.**

(30) Priorité : **18.01.78 FR 7801320**

(43) Date de publication de la demande : **25.07.79 (Bulletin 79/15)**

(45) Mention de la délivrance du brevet : **29.07.81 Bulletin 81/30**

(84) Etats contractants désignés : **BE CH DE GB IT NL**

(56) Documents cités :
**CH - A - 242 412**
**FR - A - 2 211 666**
**US - A - 2 649 387**
**US - A - 3 508 810**
**US - A - 3 887 271**

(73) Titulaire : **ESSILOR INTERNATIONAL Cie Générale d'Optique**
**1 Rue Thomas Edison Echat 902**
**F-94028 Creteil Cedex (FR)**

(72) Inventeur : **Le Naour-Sene, Lyliane**
**57 Avenue de la République**
**F-94300 Vincennes (FR)**

(74) Mandataire : **Foldès, Georges et al**
**CABINET J. BONNET THIRION 95 Bd. Beaumarchais**
**F-75003 Paris (FR)**

**EP 0 003 191 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 17, rue du Louvre, 75001 Paris, France

# Procédé pour l'intégration d'une substance photochromique à un substrat de base transparent, en particulier lentille ophtalmique, en matière organique

La présente invention concerne d'une manière générale les produits ou articles photochromiques, c'est-à-dire les produits ou articles comportant une substance photochromique propre à changer de coloration ou d'opacité, de manière réversible, lorsqu'elle est exposée à un rayonnement déterminé, et vise plus particulièrement, mais non exclusivement, le cas où il s'agit de lentilles ophtalmiques en matière organique, et notamment celle vendue sous la désignation commerciale « CR 39 ».

Les lentilles ophtalmiques photochromiques commercialisées à ce jour, pour la constitution de lunettes de soleil, sont généralement en verre minéral, et la substance photochromique qu'elles comportent est également de nature minérale.

Il s'agit le plus souvent d'halogénure d'argent.

Des essais ont été faits pour l'utilisation d'une telle substance photochromique pour des lentilles en matière organique : il y a, en pratique, incompatibilité entre les matières en cause, et, au sein d'une matière organique, l'halogénure d'argent ne réagit plus de manière convenable au rayonnement extérieur.

S'agissant du « CR 39 », cette incompatibilité est due à la nature du catalyseur nécessaire à la polymérisation du monomère de base : le seul catalyseur actuellement utilisé avec satisfaction pour cette polymérisation est le percarbonate d'isopropyle, et celui-ci, par oxydation, détruit les propriétés photochromiques de l'halogénure d'argent.

Pour pallier cette difficulté, il a été tenté d'enrober les particules d'halogénure d'argent d'un revêtement protecteur inorganique, en silice par exemple, imperméable aux produits organiques ; il s'agit là d'une solution coûteuse, qui manque, en outre, d'efficacité.

Il a alors été tenté, pour de telles lentilles ophtalmiques en matière organique, de substituer à l'halogénure d'argent une substance photochromique de nature organique.

Diverses propositions ont été faites dans ce sens, suivant lesquelles une telle substance est dispersée en masse au sein de la matière organique constitutive des lentilles concernées.

Aucune n'a à ce jour donné réellement satisfaction.

L'une des raisons peut en être trouvée comme précédemment dans l'incompatibilité des substances photochromiques proposées avec les catalyseurs de polymérisation utilisés, et dans les difficultés pratiques de mise en œuvre des procédés, notamment d'enrobage, envisagés pour surmonter cette difficulté.

D'autres propositions ont consisté à regrouper la substance photochromique au sein d'une couche particulière intermédiaire entre deux couches externes en matière organique ; la mise en œuvre en est malaisée.

D'autres propositions, enfin, ont consisté à traiter des lentilles finies, et donc après polymérisation de leur matière organique constitutive, ce qui évite le contact entre la substance photochromique mise en œuvre et le catalyseur ayant assuré cette polymérisation.

Suivant une première de ces dernières propositions la substance photochromique est déposée en film sur les lentilles ophtalmiques à traiter ; un tel film est inévitablement exposé aux chocs, aux rayures et à l'abrasion, au préjudice de sa continuité, et donc de l'homogénéité du photochromisme qu'il doit assurer.

Suivant une deuxième des propositions en question, les lentilles ophtalmiques à traiter sont immergées dans une solution concentrée de la substance photochromique proposée dans du solvant, en pratique du toluène, portée à ébullition, en pratique 70 °C ; cette substance photochromique peut être par exemple un spiropyranne, tel que proposé dans le brevet français déposé le 29 novembre 1973 sous le n° 7 343 536 et publié sous le n° 2 211 666 ou un métal dithizonate, tel que proposé dans le brevet français déposé le 29 juin 1973 sous le n° 7 324 497 et publié sous le n° 2 236 479.

Mais pour arriver à une imprégnation suffisante des lentilles ophtalmiques traitées, l'immersion de celles-ci doit être prolongée, pendant au moins 24 heures, et, compte tenu de l'ébullition de la solution mise en œuvre, des dispositions particulières doivent être prises pour une récupération satisfaisante des vapeurs de solvant, ce qui rend malaisée la mise en œuvre pratique d'un tel procédé par immersion.

En outre, les résultats qu'il permet d'obtenir sont en pratique souvent décevants.

Par ailleurs, les substances photochromiques de nature organique connues actuellement sont sujettes au vieillissement : au bout d'un temps relativement court, inférieur en tout cas à la durée de vie considérée comme normale pour des lunettes de soleil, elles deviennent inertes et ne réagissent plus au rayonnement extérieur.

S'agissant d'une substance dispersée au sein des lentilles ophtalmiques concernées, un tel vieillissement conduit inévitablement à la mise au rebut définitive de celles-ci.

S'agissant d'une substance déposée en film sur de telles lentilles ophtalmiques, on pourrait évidemment songer à régénérer un tel film après vieillissement, mais en pratique, pour les raisons exposées ci-dessus, une telle régénération, avec les procédés de mise en œuvre connus à ce jour, s'avère trop malaisée et coûteuse pour en valoir la peine, ce qui conduit également à la mise au rebut définitive desdites lentilles.

La présente invention a d'une manière générale pour objet un procédé propre à l'intégration aisée d'une substance photochromique à un quelconque substrat de base transparent, et par exemple à une lentille ophtalmique, en matière organique, notamment « CR 39 », la mise en œuvre de ce procédé étant suffisamment facile pour qu'on puisse envisager dans le cas de substances photochromiques sujettes au vieillissement, une recharge rapide et bon marché, à la demande d'un tel substrat, et en particulier d'une telle lentille ophtalmique, en une telle substance photochromique.

Elle est fondée sur l'observation d'ailleurs inattendue, que les substances photochromiques de nature organique, ou au moins certaines d'entre elles, sont avantageusement susceptibles de se prêter aisément à une mise en œuvre par transfert thermique, par exemple d'un support auxiliaire temporaire à un support définitif, selon un processus connu en lui-même, leur tension de vapeur étant suffisamment élevée pour satisfaire à un tel processus, et leur compatibilité avec le matériau du support définitif concerné, en l'espèce de la matière organique, étant suffisante pour qu'elles puissent être absorbées sous forme de vapeur dans ce matériau, et donc, après retour à l'état solide, demeurées ancrées dans ce dernier ; l'aspect inattendu de cette observation réside en ce qu'il devait normalement être pensé que l'application à des substances photochromiques de la chaleur nécessaire à un tel transfert thermique était de nature à perturber, voire même à détruire, leurs caractéristiques photochromiques.

Il n'en est en fait rien, au moins dans les conditions pratiques de mise en œuvre de l'invention, suivant lesquelles l'application de chaleur aux produits traités est relativement brève.

S'agissant de l'intégration d'une substance photochromique à un substrat de base transparent, en particulier lentille ophtalmique, en matière organique, le procédé selon l'invention est du genre suivant lequel on assure un contact entre un tel substrat et un matériau photochromique formé au moins pour partie de la substance photochromique à mettre en œuvre, et on applique de la chaleur audit matériau, et est caractérisé en ce qu'on opère par transfert thermique, c'est-à-dire à une température suffisante pour assurer une sublimation au moins partielle de la substance photochromique.

Un tel procédé peut aisément être mis en œuvre, sans matériel trop complexe et/ou coûteux, par n'importe quel praticien, et ne nécessite qu'une intervention de durée réduite, de l'ordre de la minute par exemple.

Une lentille ophtalmique photochromique suivant l'invention peut donc aisément, et au moindre prix, être rechargée à la demande, après vieillissement de la substance photochromique qu'elle comporte, dans le cas bien entendu où cette substance est effectivement sujette à vieillissement.

En outre, bien que celle-ci soit pour l'essentiel rassemblée au voisinage de la surface d'une telle lentille, et il s'agit là d'une caractéristique complémentaire de l'invention, elle demeure ancrée dans la masse même de cette lentille, à la différence d'un quelconque film extérieur, et bénéficie donc pour sa protection à l'égard des chocs, des rayures, et de l'abrasion, des caractéristiques mécaniques propres à la matière organique constitutive de cette lentille.

Comme dans le cas d'une imprégnation par immersion, le procédé de transfert thermique suivant l'invention intéresse avantageusement un produit fini, c'est-à-dire déjà polymérisé, ce qui évite toute réaction entre la substance photochromique mise en œuvre, et le catalyseur de polymérisation, celui-ci n'étant plus actif après la polymérisation qu'il a assurée.

Mais, outre que le processus chimique de diffusion en phase gazeuse auquel il répond est différent, sa facilité et sa rapidité de mise en œuvre ainsi que sa réelle efficacité, permettent d'en envisager une application effective aux produits concernés.

Les caractéristiques et avantages de l'invention ressortiront d'ailleurs de la description qui va suivre, à titre d'exemple, en référence aux dessins schématiques annexés sur lesquels :

La figure 1 est une vue en perspective d'une lentille ophtalmique, qui est en matière organique, et qui est photochromique suivant l'invention ;

La figure 2 est, à échelle supérieure, une vue partielle en coupe de cette lentille, suivant la ligne II-II de la figure 1 ;

La figure 3 est une vue en coupe illustrant une mise en œuvre possible d'un procédé propre à l'intégration suivant l'invention d'une substance photochromique à une lentille ophtalmique en matière organique.

Ces figures illustrent l'application de l'invention aux lentilles ophtalmiques.

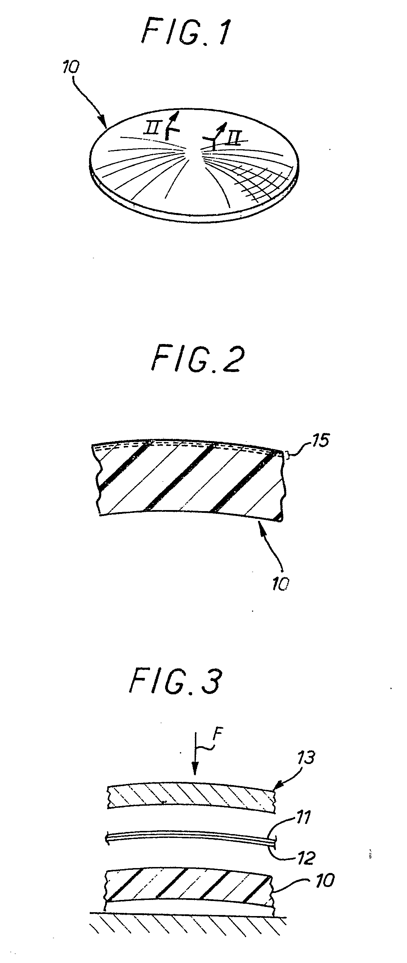

A la figure 1 on reconnaît, sous la référence générale 10, une telle lentille ophtalmique.

Par lentille ophtalmique on entend, ici, le palet à contour circulaire fourni au praticien pour montage sur une quelconque monture de lunettes, après détourage approprié à effectuer par ce praticien.

Il s'agit en l'espèce d'une lentille ophtalmique en matière organique, et par exemple d'une lentille ophtalmique en poly [éthylène glycol di-allyle di-carbonate] usuellement vendue sous la désignation commerciale « CR 39 » ; il pourrait aussi bien s'agir d'une lentille ophtalmique en polycarbonate ou en polyméthacrylate de méthyle, ou encore en polyuréthanne transparent.

L'invention a pour objet de permettre l'intégration d'une substance photochromique au substrat de base translucide en matière organique que constitue une telle lentille.

Elle propose à cet effet d'opérer par transfert thermique, c'est-à-dire de mettre en contact un matériau photochromique formé au moins pour partie d'une telle substance avec une telle lentille, et à appliquer conjointement de la chaleur au matériau.

Il faut bien entendu que la substance choisie soit compatible avec les matières organiques.

Il faut en outre qu'elle présente une tension de vapeur propre à en permettre la mise en œuvre par transfert thermique.

Celles notamment des substances photochromiques qui appartiennent au groupe des spiropyrannes répondent de manière satisfaisante à cette double exigence.

Ainsi qu'on le sait il s'agit de substances répondant à la formule générale suivante :

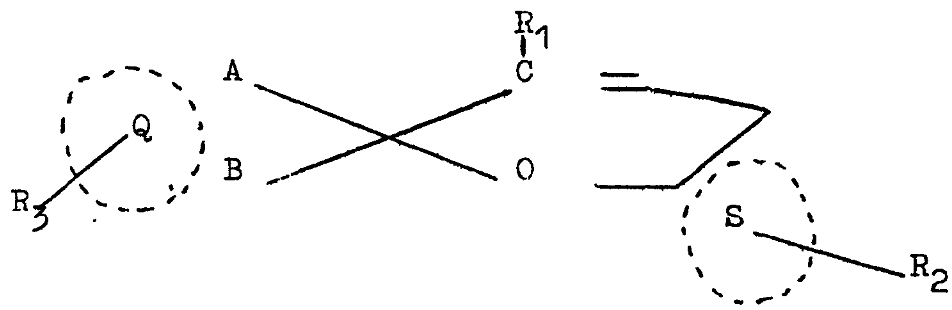

dans laquelle les symboles indiqués sont la signification suivante :

A = O, S, C portant deux radicaux alkyles de substitution ;

B = S, N substitué par un radical alkyle, hydroxyalkyle, alkoxyalkyle ;

$R_1$ = H, radical alkyle, radical aromatique, alkoxy, halogène, nitrile, phénoxy ;

S = radical aromatique ayant un ou plusieurs substituants $R_2$

$R_2$ = halogène, nitro, alkoxy ;

Q = système cyclique aromatique ou un hétérocycle pouvant porter des substituants $R_3$ alkyles, halogènes.

D'autres substances photochromiques donnant également satisfaction appartiennent au groupe des métaux dithizonates.

Ainsi qu'on le sait, il s'agit de complexes internes donnés entre différents métaux et la dithizone, laquelle répond à la formule générale suivante :

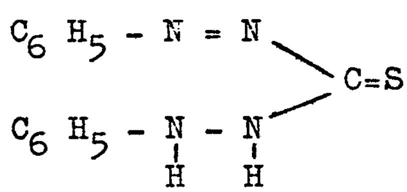

En pratique, la mise en œuvre de ces substances se fait de préférence sous forme liquide ou pâteuse.

On procède donc d'une manière générale à une dispersion de la substance photochromique retenue dans un solvant approprié, et, éventuellement, à l'addition au mélange obtenu d'un liant jouant le rôle d'épaississant et permettant d'obtenir la viscosité recherchée.

S'agissant par exemple d'une mise en œuvre sous forme liquide, un tel liant peut être de la nitrocellulose ;

S'agissant, en variante, d'une mise en œuvre sous forme pâteuse, ce liant peut par exemple être du collodion ou de la nitrocellulose plastifiée.

Dans l'un et l'autre cas, notamment lorsque la substance photochromique retenue est un spiropyranne, le solvant peut être un acétate d'amyle, un acétate de butyle, un mélange de ces deux solvants, ou encore un solvant aromatique.

L'application à la lentille 10 du matériau photochromique ainsi obtenue peut, si désiré, se faire directement, par exemple au pinceau.

Cependant, de préférence, cette application se fait à l'aide d'un support temporaire auxiliaire sur lequel ce matériau photochromique est initialement rapporté.

Un tel procédé est par exemple illustré par la figure 3, sur laquelle on reconnaît en 10 la lentille à traiter.

Pour support temporaire auxiliaire on peut par exemple choisir une feuille de papier kraft 11, ou une feuille de papier filtre.

Une telle feuille est globalement revêtue d'une enduction 12 de matériau photochromique, tel que défini ci-dessus, puis, séchée, par évaporation du ou des solvants que comporte initialement ce matériau.

Outre que ce solvant permet une dispersion plus facile de la substance photochromique mise en œuvre pour la constitution du matériau photochromique recherché il permet, par son évaporation, un séchage plus rapide de la feuille 11 sur laquelle ce matériau est rapporté.

Que ce matériau photochromique soit directement appliqué à la lentille 10 ou qu'il soit rapporté sur une feuille 11 elle-même ensuite appliquée à une telle lentille 10, le procédé suivant l'invention implique également une application de chaleur à ce matériau lors de son contact avec cette lentille.

Dans l'exemple de mise en œuvre illustré par la figure 3, cette application de chaleur se fait à l'aide d'un outil chauffant en forme 13, ayant globalement la configuration de la lentille à traiter 10, pour application à celle-ci, suivant la flèche F de la figure 3, de la feuille 11 porteuse de l'enduction de matériau photochromique 12.

L'application de l'outil 13 est maintenue pendant un temps réduit, de l'ordre par exemple de 45 secondes, et se fait sous une pression juste suffisante pour que le contact recherché entre le matériau photochromique 12 et la lentille 10 se fasse dans de bonnes conditions.

La température de l'outil 13 est choisie de manière à ce que la température de la feuille de support temporaire auxiliaire 11 demeure limitée, et par exemple comprise entre 180° et 220 °C.

Si désiré, avant mise en contact de la lentille 10 avec l'enduction 12 de matériau photochromique, cette lentille 10 peut être préchauffée à une température inférieure à celle du transfert thermique à obtenir ultérieurement, de l'ordre par exemple de 100 °C.

Mais cette lentille peut également demeurer à la température ambiante jusqu'à son traitement.

De même, si désiré, il est possible, pour éviter tout contact entre l'outil chauffant 13 et la feuille de support temporaire auxiliaire 11, d'interposer entre cet outil et cette feuille une couche de même nature que celle de cette dernière (non représenté).

Quoi qu'il en soit, lors de l'application de chaleur au matériau photochromique 12 par l'outil chauffant 20, une partie au moins de la substance photochromique formant ce matériau est l'objet d'une sublimation, et, cette sublimation étant effectuée au contact de la lentille à traiter 10, une partie au moins de la vapeur formée est absorbée par la matière organique constitutive de cette lentille.

Après l'intégration ainsi assurée à celle-ci d'une telle substance photochromique, la lentille 10 traitée est lavée à l'aide de tout solvant propre à permettre une élimination du surplus de substance photochromique qui ne s'est pas sublimé et éventuellement du liant initialement associé à celle-ci.

La partie de la substance photochromique qui, après sublimation, a migré dans la matière organique constitutive de la lentille 10 et y a été absorbée, forme dès lors, dans la masse même de cette lentille, à la surface de celle-ci, au voisinage de laquelle elle se trouve rassemblée, tel qu'illustré par la figure 2, une zone 15, qui forme une partie intégrante de cette lentille, puisque provenant d'une migration dans celle-ci d'une substance extérieure, et qui présente les caractéristiques photochromiques recherchées, dues à cette substance.

Pour une meilleure illustration de l'invention, on en donnera ci-après des exemples pratiques de mélanges photochromiques susceptibles d'être mis en œuvre suivant l'invention et de donner satisfaction, avec leurs conditions d'application.

En outre, pour chaque mélange, un contrôle optique est fait comme suit :

On soumet la lentille concernée à un rayonnement ultra-violet pendant une minute, ce rayonnement étant fourni par une lampe à vapeur de mercure de 400 watts qui reproduit le spectre solaire grâce à un filtre interférentiel, et on mesure la densité optique de cette lentille avant irradiation ($D_O$), puis après irradiation (D).

La différence $\Delta D = D - D_O$ caractérise l'efficacité du mélange photochromique correspondant.

Mélange 1

Composition :

Substance photochromique :

| | |
|---|---|
| dithizonate de triméthoxy 2, 4, 6 phényl mercure | 2 % |

Solvant :

| | |
|---|---|
| alcool éthylique | 59 % |
| acétate d'éthyle | 19 % |

Epaississant :

| | |
|---|---|
| nitrocellulose plastifiée au phtalate de dibutyle | 20 % |

Conditions d'application :

— On imprègne un papier filtre avec ce mélange et on le sèche jusqu'à dessication complète ;

— Le papier est ensuite placé sur la lentille à traiter et chauffé à 210° par l'intermédiaire d'une plaque métallique formant outil chauffant en forme, pendant 45 secondes ;

— Après transfert, la lentille est lavée à l'acétone.

Résultats :

$D_O = 0{,}1146$ $D = 0{,}2628$ $\Delta D = 0{,}1482$

Mélange 2

Composition :

Identique à celle du mélange 1 avec comme substance photochromique du dithizonate de trifluorométhyl 2 phényl mercure.

Conditions d'application :

Comme pour le mélange 1

Résultats :

$D_O = 0{,}0836$ $D = 0{,}1864$ $\Delta D = 0{,}1028$

Mélange 3

Composition :

Identique à celle du mélange 1 mais avec du dithizonate de cyclohexyl mercure pour substance

photochromique

Conditions d'application :

Comme pour le mélange 1

Résultats :

$D_O = 0,1379$ $D = 0,2328$ $\Delta D = 0,0949$

Mélange 4

Composition :

Identique à celle du mélange 1 mais avec du dithizonate de phényl mercure pour substance photochromique.

Conditions d'application :

Comme pour le mélange 1

Résultats :

$D_O = 0,1403$ $D = 0,2219$ $\Delta D = 0,0816$

Mélange 5

Composition :

Substance photochromique :

| | |
|---|---|
| [triméthyl 1,3,3-indolino]2-spiro 2' nitro 6' méthoxy 8' benzopyranne | 1 % |
| Solvant et épaississant : | |
| benzène | 10 % |
| vernis glycérophtalique | 89 % |

Conditions d'application :

Comme pour le mélange 1

Résultats :

$D_O = 0,1278$ $D = 0,4330$ $\Delta D = 0,3052$

Mélange 6

Composition :

Substance photochromique :

| | |
|---|---|
| [diméthyl 3,3, isopropyl 1 indolino]2 spiro 2' nitro 6 méthoxy 8' benzopyranne | 1 % |
| Solvant et épaississant : | |
| benzène | 10 % |
| vernis glycérophtalique | 89 % |

Conditions d'application :

Comme pour le mélange 1

Résultats :

$D_O = 0,9545$ $D = 0,2104$ $\Delta D = 0,156$

Mélange 7

Composition :

Substance photochromique :

| | |
|---|---|
| [diméthyl 3,3, isopropyl 1 indolino]2 spiro 2' nitro 6 méthyl thioisopropyl 8' benzopyranne | 1 % |
| Solvant et épaississant : | |
| benzène | 10 % |
| vernis glycérophtalique | 89 % |

Conditions d'application :

Comme pour le mélange 1

Résultats :

$D_O = 0,0696$ $D = 0,1349$ $\Delta D = 0,0753$

Mélange 8

Composition :

Substance photochromique :

| | |
|---|---|
| [méthyl 3 benzothiazole]2 spiro 2' nitro 6' méthoxy 8' benzopyranne | 5 % |
| benzène | 95 % |

Conditions d'application :

On enduit la lentille avec le mélange et on laisse le solvant s'évaporer. On applique à la surface de la lentille à traiter une feuille d'aluminium qui sert d'intermédiaire entre elle et une plaque chauffante. On chauffe à environ 210 °C pendant 30 s.

Résultats :

$D_O = 0,0362$ $D = 0,0835$ $\Delta D = 0,0473$

Mélange 9

Composition :

Substance photochromique :

| | |
|---|---|
| [méthyl 3 benzothiazole]2 spiro 2' propoxy 3' nitro 6' méthoxy 8' benzopyranne | 5 % |
| Solvant : | |
| benzène | 95 % |

Conditions d'application :

Comme pour le mélange 8

Résultats :

$D_O = 0{,}0362$ D = 0,0706 ΔD = 0,0464

Mélange 10

Composition :

Substance photochromique :

[méthyl 3 benzoxazole 1,3]2 spiro 2′ phénoxy 3′ nitro 6′ méthoxy 8′ benzopyranne 5 %

Solvant :

benzène 95 %

Conditions d'application :

On imprime un papier filtre ave le mélange. Le papier séché est ensuite mis en contact avec la lentille à traiter et l'on chauffe pendant 45 s à 200 °C.

Résultats :

$D_O = 0{,}0605$ D = 0,1238 ΔD = 0,0633

Mélange 11

Composition :

Substance photochromique :

[triméthyl 3,4,4, oxazole]2 spiro 2′ propoxy 3′ nitro 6′ méthoxy 8′ benzopyranne 5 %

Solvant :

benzène 95 %

Conditions d'application :

Comme pour le mélange 10

Résultats :

$D_O = 0{,}0530$ D = 0,0942 ΔD = 0,0412

Mélange 12

Composition :

Substance photochromique :

[hexaméthyl 3,4,5,5,6,6 -oxazine 1,3]-2-spiro 2′ méthyl 3′ nitro 6′ méthoxy 8′ benzopyranne 5 %

Solvant :

benzène 95 %

Conditions d'application :

Comme pour le mélange 10

Résultats :

$D_O = 0{,}0540$ D = 0,0757 ΔD = 0,0217

Bien entendu, la présente invention ne se limite pas à ceux de ces modes de mise en œuvre qui ont été décrits ci-dessus mais englobe toute variante d'exécution ; en particulier, il est possible d'effectuer sous vide le transfert thermique, ce qui permet d'abaisser la température nécessaire à un tel transfert.

En outre, et ainsi qu'on l'aura compris, la profondeur de pénétration de la substance photochromique dans la lentille ophtalmique concernée est indifférente ; ce qui compte c'est la densité globale de cette substance dans une telle lentille, prise transversalement, c'est-à-dire globalement parallèlement à l'axe optique de celle-ci.

**Revendications**

1. Procédé pour l'intégration d'une substance photochromique à un substrat de base transparent, en particulier lentille ophtalmique, en matière organique, du genre suivant lequel on assure un contact entre un tel substrat (10) et un matériau photochromique (12) formé au moins pour partie de la substance photochromique à mettre en œuvre, et on applique de la chaleur audit matériau (12), caractérisé en ce qu'on opère par transfert thermique, c'est-à-dire à une température suffisante pour assurer une sublimation au moins partielle de la substance photochromique.

2. Procédé suivant la revendication 1, caractérisé en ce que, pour son application au substrat (10) à traiter, le matériau photochromique (12) est porté par un support temporaire (11), en feuille, tel que papier filtre ou papier kraft par exemple.

3. Procédé suivant l'une quelconque des revendications 1, 2, caractérisé en ce que l'application de la chaleur se fait à l'aide d'un outil chauffant (13) en forme, ayant globalement la configuration du substrat (10) à traiter.

4. Procédé suivant l'une quelconque des revendications 1 à 3, caractérisé en ce que, avant contact avec le matériau photochromique (12), le substrat (10) à traiter est préchauffé à une température inférieure à la température de transfert.

5. Procédé suivant l'une quelconque des revendications 1 à 4, caractérisé en ce que l'on prend comme substance photochromique un spiropyranne.

6. Procédé suivant l'une quelconque des revendications 1 à 4, caractérisé en ce que l'on prend comme substance photochromique un métal dithizonate.

7. Procédé suivant l'une quelconque des revendications 1 à 6, caractérisé en ce que, après transfert

thermique, le substrat (10) traité est lavé à l'aide d'un solvant.

## Claims

1. Process for integrating a photochromic substance into a transparent-based substrate, in particular an ophthalmic lens, of organic material, of the kind in which contact is ensured between such a substrate (10) and a photochromic material (12) formed at least in part of the photochromic substance to be employed, and applying heat to the said material (12), characterised in that it is performed by thermal transfer, i.e., at a temperature sufficient to ensure at least partial sublimation of the photochromic substance.

2. Process according to claim 1, characterised in that for its application to the substrate (10) to be treated the photochromic material (12) is carried by a temporary sheet support (11) such as for example filter paper or kraft paper.

3. Process according to one of claims 1 or 2, characterised in that the application of heat is by means of a heating tool (13) of a shape having generally the configuration of the substrate (10) to be treated.

4. Process according to any one of claims 1 to 3, characterised in that before contact with the photochromic material (12) the substrate (10) to be treated is preheated to a temperature less than the transfer temperature.

5. Process according to any one of claims 1 to 4, characterised in that a spiropyran is taken as the photochromic substance.

6. Process according to any one of claims 1 to 4 characterised in that a metal dithizonate is taken as the photochromic substance.

7. Process according to any one of claims 1 to 6, characterised in that after thermal transfer the treated substrate (10) is washed with the help of a solvent.

## Ansprüche

1. Verfahren zur Einbringung einer fotochromen Substanz in ein transparentes Substrat aus einem organischen Material, insbesondere in ein Brillenglas, bei welchem das Substrat (10) und ein fotochromisches Material (12), welches wenigstens einen Bestandteil der verwendeten fotochromen Substanz bildet, in Kontakt gebracht werden und dem Material (12) Wärme zugeführt wird, dadurch gekennzeichnet, daß mit einem Thermotransfer gearbeitet wird, d.h. mit einer Temperatur, die ausreicht, um wenigstens eine teilweise Sublimation der fotochromen Substanz sicherzustellen.

2. Verfahren nach Anspruch 1, dadurch gekennzeichnet, daß für die Aufbringung auf das zu behandelnde Substrat (10) das fotochrome Material (12) von einem Zwischenträger (11) getragen wird, einem Blatt, wie beispielsweise Filterpapier oder Kraftpapier.

3. Verfahren nach Anspruch 1 oder 2, dadurch gekennzeichnet, daß die Zuführung der Wärme mittels eines Heizwerkzeuges (13) durchgeführt wird, dessen Form im allgemeinen der Form des zu behandelnden Substrates (10) entspricht.

4. Verfahren nach einem der Ansprüche 1 bis 3, dadurch gekennzeichnet, daß vor dem Kontakt mit dem fotochromen Material (12) das zu behandelnde Substrat (10) auf eine Temperatur unterhalb der Transfertemperatur erhitzt wird.

5. Verfahren nach einem der Ansprüche 1 bis 4, dadurch gekennzeichnet, daß als fotochrome Substanz ein Spiropyran verwendet wird.

6. Verfahren nach einem der Ansprüche 1 bis 4, dadurch gekennzeichnet, daß als fotochrome Substanz ein Metalldithizonat verwendet wird.

7. Verfahren nach einem der Ansprüche 1 bis 6, dadurch gekennzeichnet, daß nach dem Thermotransfer das behandelte Substrat (10) mittels eines Lösungsmittels gewaschen wird.

FIG. 1

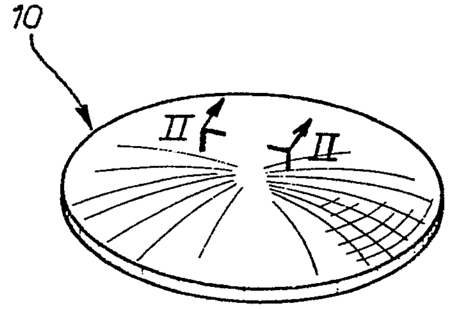


FIG. 2

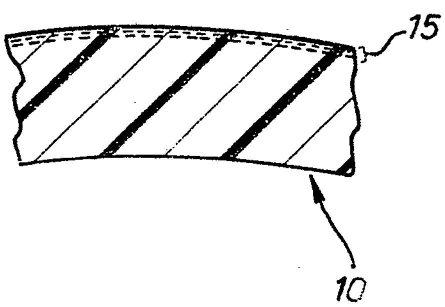


FIG. 3